# FASCICULE DE BREVET EUROPEEN

(11) **EP 1 928 805 B1**
(45) Date de publication et mention de la délivrance du brevet: **09.11.2016**
(21) Numéro de dépôt: 06808197.5
(22) Date de dépôt: 25.09.2006
(51) Int. Cl.: C04B 35/185, C04B 35/106, C04B 35/66, C04B 35/105, C03B 5/43, C04B 35/63, C04B 35/634

(54) **PRODUIT REFRACTAIRE FRITTE PRESENTANT UNE RESISTANCE AUX CHOCS THERMIQUES AMELIOREE**
FEUERFESTES SINTERPRODUKT MIT VERBESSERTER WÄRMESCHOCKBESTÄNDIGKEIT
SINTERED REFRACTORY PRODUCT EXHIBITING ENHANCED THERMAL SHOCK RESISTANCE

(30) Priorité: 26.09.2005 FR 0509814
(43) Date de publication de la demande: 11.06.2008
(73) Titulaire: Saint-Gobain Centre de Recherches et d'Etudes Européen, 92400 Courbevoie (FR)
(72) Inventeur: AVEDIKIAN, Richard, F-84440 Robion (FR); BOBO, Michel, F-84450 Saint-saturnin Les Avignon (FR); CHAMPION, Thibault, F-84460 Cheval Blanc (FR); HIS, Christian, F-84300 Cavaillon (FR)
(74) Mandataire: Nony
(86) Numéro de dépôt international: PCT/FR2006/002180
(87) Numéro de publication internationale: WO 2007/034092

(56) Documents cités:
- DE-A1- 3 842 280
- JP-A- 6 080 477
- JP-A- 2002 220 290
- US-A- 4 290 814
- US-A- 4 646 950
- TEMOCHE F ET AL: "Processing of mullite-zirconia grains for slip cast ceramics" CERAMICS INTERNATIONAL, CERAMURGICA, FAENZA, IT, vol. 31, no. 7, 21 janvier 2005 (2005-01-21), pages 917-922, XP004966740 ISSN: 0272-8842

## Description

L'invention concerne de nouveaux produits réfractaires frittés présentant une résistance aux chocs thermiques améliorée.

Parmi les produits réfractaires, on distingue les produits fondus et coulés et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Un mélange mis au point pour fabriquer un produit fondu et coulé n'est donc pas a *priori* utilisable telle quel pour fabriquer un produit fritté et réciproquement.

Les produits frittés, selon leur composition chimique et leur mode de préparation, sont destinés à des industries très variées.

Parmi les produits frittés, on connaît notamment les produits alumine-zircone-silice, couramment appelés AZS, ainsi que les produits dits alumineux, utilisés en particulier dans certaines zones des fours verriers.

Les produits tels que ceux décrits dans FR 2 552 756 au nom de Emhart Industries conviennent généralement bien dans cette application. Des produits tels que le BPAL, le ZA33 ou le ZIRAL, produits et commercialisés par Saint-Gobain SefPro sont également particulièrement bien adaptés et aujourd'hui très largement utilisés dans certaines zones des fours verriers.

On connaît également de EP 0 404 610 des mélanges réfractaires contenant de la zircone monoclinique permettant d'obtenir des produits avec une résistance aux chocs thermiques remarquable.

Cependant, les industries pour la production de verre ou d'énergie ont besoin de matériaux réfractaires de plus en plus performants.

Le but de la présente invention est donc de fournir un produit réfractaire présentant une résistance aux chocs thermiques améliorée, et des propriétés de résistance mécanique à chaud, de résistance à la corrosion et de porosité similaires ou supérieures à celles des produits réfractaires actuellement utilisés.

Selon l'invention, on atteint ce but au moyen d'un produit réfractaire fritté selon la revendication 1.

Comme on le verra plus loin, de manière surprenante, le produit réfractaire fritté selon l'invention présente une résistance aux chocs thermiques améliorée.

US 4 646 950, JP 06 080 477 , JP 2002 220 290 ne décrivent pas l'ajout d'au moins 1% de grains de mullite-zircone présentant une taille inférieure ou égale à 0,3 mm.

De préférence, le produit selon l'invention comporte encore une ou plusieurs des caractéristiques optionnelles suivantes :
- La somme des teneurs en Al₂O₃, SiO₂, ZrO₂ et Cr₂O₃ est supérieure ou égale à 94 %, de préférence 98 %, en pourcentages en poids sur la base des oxydes. On considère que, dans ces conditions, la présence des autres oxydes ne modifie pas sensiblement les résultats obtenus.
- Le produit selon l'invention comporte plus de 19 %, de préférence plus de 24 %, de préférence encore plus de 30 %, et/ou moins de 60%, de préférence moins de 50 %, de grains de mullite-zircone, en pourcentages en poids sur la base des oxydes.
- Le produit selon l'invention comporte au moins 10 % et/ou au plus 33 % de ZrO₂, en pourcentages en poids sur la base des oxydes.
- Le produit selon l'invention comporte au moins 6 % et/ou au plus 18 % de SiO₂, en pourcentages en poids sur la base des oxydes.
- Le produit selon l'invention comporte au moins 50 % et/ou au plus 80 % de Al₂O₃, en pourcentages en poids sur la base des oxydes.
- Le produit selon l'invention est constitué, de préférence, sensiblement de 100% en poids d'oxydes. A cet effet, de préférence, toutes les matières premières utilisées dans la charge de départ sont des oxydes, exceptés les ajouts nécessaires à la mise en forme.
- Dans un mode de réalisation, de préférence le produit selon l'invention ne comporte pas de Cr₂C₃, ou seulement sous forme de traces. Cet oxyde est en effet une impureté indésirable dans certaines applications, notamment quand le bloc selon l'invention est au contact avec certains verres fondus. Il peut en effet est être à l'origine d'une diminution de la qualité du verre fondu par des phénomènes de bullage ou de coloration.
- Au moins si le produit selon l'invention est destiné à des applications verrières, ni la charge de départ, ni le produit selon l'invention ne comportent de silicium métal, le silicium métal étant incompatible avec ces applications. Pour la même raison, de préférence, le produit selon l'invention ne contient pas de fibres métalliques.
- La taille de grains de mullite-zircone est comprise entre 0 à 3 mm.
- Le produit selon l'invention comporte de préférence au moins 3 %, de préférence au moins 4 %, et, de préférence encore, moins de 10%, de préférence moins de 6%, en pourcentages en poids sur la base des oxydes, de grains de mullite-zircone présentant une taille inférieure ou égale à 0,7 mm.
- Le produit selon l'invention comporte de préférence au moins 1,5%, en pourcentages en poids sur la base des oxydes, de grains de mullite-zircone présentant une taille inférieure ou égale à 0,3 mm. Il en résulte une amélioration notable de la résistance aux chocs thermiques.
- Le produit selon l'invention contient moins de 1% en poids de MgO, sur la base des oxydes, de préférence encore ne contient pas de MgO, sauf sous forme d'impuretés, c'est-à-dire à des teneurs inférieures à 0,5%, de préférence inférieures à 0,2%.
- Le produit selon l'invention est déjà fritté avant mise en position de service ou installation, c'est-à-dire n'est pas fritté *in situ.*

L'invention concerne également l'utilisation d'un produit réfractaire selon l'invention comme pièce de forme pour la mise en forme du verre fondu comme consommable ou comme revêtement réfractaire, en particulier dans une chambre de combustion d'une installation industrielle.

Par « grain de mullite-zircone », on entend un grain réfractaire obtenu par frittage ou par fusion et dont l'analyse chimique révèle la présence majoritaire d'alumine (Al₂O₃), de silice (SiO₂) et de zircone (ZrO₂), la silice et l'alumine étant présentes sous la forme 2 SiO₂- 3 Al₂O₃ (mullite). L'alumine (Al₂O₃), la silice (SiO₂) et la zircone (ZrO₂) sont donc les trois constituants principaux, en poids, d'un grain de mullite-zircone.

On appelle « taille d'un grain » sa plus grande dimension. On considère que, par définition, un « grain » a une taille inférieure à 4 mm.

Pour fabriquer un produit réfractaire selon l'inventian sous la forme d'un bloc fritté, c'est-à-dire d'une pièce façonnée frittée avant mise en service, on peut mettre en oeuvre un procédé de fabrication comportant les étapes successives suivantes :
a) préparation d'une charge de départ,
b) coulage de la dite charge dans un moule ou compaction par vibration et/ou pressage et/ou pilonnage de ladite charge à l'intérieur du moule de manière à former une préforme,
c) démoulage de la préforme,
d) séchage de ladite préforme, de préférence sous air ou atmosphère contrôlée en humidité, de préférence de manière que l'humidité résiduelle de la préforme reste comprise entre 0 et 0,5%,
e) cuisson de ladite préforme sous atmosphère oxydante à une température comprise entre 1300 à 1800°C de manière à former un bloc réfractaire fritté selon l'invention.

Les étapes a) à e) sont des étapes classiquement mises en oeuvre pour fabriquer des produits frittés.

A l'étape a), la charge de départ est constituée à partir de différentes matières premières dont la composition chimique et la granulométrie sont variables. Selon l'invention, elle comporte de 17 à 85 % de grains de mullite-ziroane, en pourcentage en poids sur la base des oxydés réfractaires, et tous matériaux réfractaires permettant d'atteindre la composition globale désirée, par exemple l'alumine tabulaire, le corindon électrofondu, le zircon, l'oxyde de chrome, notamment fritté sous forme de chamotte, les matériaux électrofondus, notamment à base d'Al₂O₃-ZrO₂-SiO₂, l'alumine, la fumée de silice, la zircone monoclinique et/ou stabilisée, l'oxyde de chrome pigmentaire, etc.

La charge de départ est déterminée de manière que le produit obtenu à la fin de l'étape e) soit conforme à l'invention et présente en outre une ou, de préférence, plusieurs des caractéristiques préférées du produit selon l'invention.

La charge de départ comporte de préférence au moins 1,5%, en pourcentages en poids sur la base des oxydes, de grains de mullite-zircone présentant une taille inférieure ou égale à 0,3 mm. Ces grains peuvent être introduits par une classe granulométrique quelconque adaptée, par exemple, de manière non limitative, 0-0,7mm, 0-0,3mm, ou 0-0,15mm.

La charge de départ peut également contenir un ou plusieurs additifs, sous forme particulaire ou non, pour assurer à la charge de départ une plasticité suffisante pendant l'étape b) de mise en forme et pour conférer une résistance mécanique suffisante à la préforme obtenue en fin de l'étape d). Les quantités d'additifs ne sont pas limitatives. En particulier, les quantités classiquement mises en oeuvre dans les procédés de frittage connus sont appropriées.

Certains oxydes peuvent être apportés par les additifs.

Comme exemples d'additifs utilisables, on peut citer, de façon non limitative:
- des liants temporaires organiques (c'est-à-dire éliminés en tout ou en partie lors des étapes de séchage et de cuisson), tels que des résines, des dérivés de la cellulose ou de la lignone, comme la carboxyméthylcellulose, la dextrine, des polyvinyle alcools, etc. De préférence, la quantité du liant temporaire est comprise entre 0,1 et 6 % en poids par rapport au poids du mélange d'oxydes particulaires de la charge de départ.
- des liants chimiques, tels que l'acide phosphorique, le monophosphate d'aluminium, etc. ;
- des liants hydrauliques, tels que des ciments alumineux comme le ciment SECAR 71, ou de type aluminate de CaO ;
- des défloculants, tels que des polyphosphates de métaux alcalins ou des dérivés méthacrylates ;
- des promoteurs de frittage tels que le bioxyde de titane (en une proportion n'excédant pas 2% environ du poids de la composition) ou l'hydroxyde de magnésium ;
- des agents de mise en forme tels que les stéarates de magnésium ou de calcium ;
- des ajouts de type argileux qui vont faciliter la mise en oeuvre et aider au frittage. Ces ajouts apportent de l'alumine et de la silice, et quelques oxydes de métaux alcalins ou alcalino terreux, voire de l'oxyde de fer, selon le type d'argile.

Dans le cas où le mélange réfractaire contient un liant chimique ou hydraulique, il constitue alors un béton, pouvant être mis en oeuvre par exemple par vibration.

De préférence, la charge de départ contient moins de 1% en poids de MgO, sur la base des oxydes, de préférence encore ne contient pas de MgO, sauf sous forme d'impuretés, c'est-à-dire à des teneurs inférieures à 0,5%, de préférence inférieures à 0,2%. Le procédé en est simplifié.

Pour obtenir un produit réfractaire selon l'invention en fin d'étape e), la charge de départ présente l'analyse chimique moyenne suivante, en pourcentages en poids sur la base des oxydes réfractaires :
20 % < Al₂O₃ < 90 %
2%<SiO₂<30%
3%<ZrO₂<50%
0% ≤ Cr₂O₃ < 0,5 %,
et comprend de 17 à 85 % de grains de mullite-zircone, en pourcentage en poids sur la base des oxydes réfractaires.

Dans la charge de départ, de l'eau est également classiquement ajoutée.

Le mélange des différents constituants de la charge de départ est poursuivi jusqu'à obtention d'une charge de départ sensiblement homogène.

A l'étape b), la charge est mise en forme et disposée dans un moule.

Dans le cas d'une mise en forme par pressage, une pression spécifique de 400 à 800 Kg/cm² est appropriée pour une pâte non plastique. Le pressage est de préférence effectué de manière uniaxiale ou isostatique, par exemple au moyen d'une presse hydraulique. Il peut être avantageusement précédé d'une opération de damage manuel ou pneumatique et/ou de vibration.

Le séchage de l'étape d) peut être effectué à une température modérément élevée. De préférence il est effectué à une température comprise entre la température ambiante et 200°C. Il dure classiquement entre 10 heures et une semaine selon le format de la préforme, jusqu'à ce que l'humidité résiduelle de la préforme soit inférieure à 0,5 %.

La préforme séchée est alors mise à cuire (étape e)) de manière à être frittée. L'opération de frittage est bien connue de l'homme du métier. Le frittage correspond à la consolidation thermique du matériau. Il s'accompagne généralement d'une diminution de la porosité et d'un retrait dimensionnel.

La température de frittage est fonction de la composition du mélange de départ, mais une température comprise entre 1300 et 1800 °C est appropriée dans la plupart des cas. Le frittage est de préférence effectué sous atmosphère oxydante, de préférence encore sous air, de préférence à pression atmosphérique. La durée de la cuisson, comprise entre 1 et 15 jours environ de froid à froid, est variable en fonction des matériaux mais aussi de la taille et de la forme des produits réfractaires à fabriquer.

L'étape e) transforme la préforme en un produit réfractaire selon l'invention, particulièrement utile sous forme d'une pièce de forme pour la mise en forme du verre fondu ou comme tuile réfractaire de chambre de combustion d'une installation industrielle.

Classiquement, la cuisson de la préforme est effectuée dans un four de cuisson.

A la différence des produits frittés *in situ,* c'est-à-dire frittés après avoir été mis dans leur position de service, par exemple après avoir été projetés sur une paroi à protéger, le bloc selon l'invention résulte d'un frittage dans un four de cuisson, de sorte que chacune de ses faces est sensiblement chauffée de la même manière, avant d'être mis en position de service. On évite ainsi que le gradient de températures dépende du point considéré sur la surface extérieure du bloc. A la différence des produits frittés *in situ,* le produit selon l'invention présente ainsi une densité et une microstructure homogènes dans tout le produit, ce qui a pour conséquence d'améliorer la résistance aux chocs thermiques, la résistance à la corrosion par la vapeur d'eau et la résistance à la corrosion par le verre fondu.

Les produits réfractaires selon l'invention peuvent alors être utilisés directement ou bien assemblés au moyen de joints de dilatation appropriés, suivant des techniques bien connues de l'homme de l'art.

La façon de déterminer les quantités des constituants du produit réfractaire est parfaitement connue de l'homme du métier. En particulier, l'homme du métier sait que les grains de mullite-zircone ainsi que les oxydes Al₂O₃, SiO₂, ZrO₂ et Cr₂O₃ présents dans la charge de départ se retrouvent dans le produit réfractaire fritté. Pour une même quantité des constituants du produit réfractaire fritté, la composition de la charge de départ peut cependant varier, notamment en fonction des quantités et de la nature des additifs présents dans cette charge.

Les exemples non limitatifs suivants sont donnés dans le but d'illustrer l'invention.

Dans ces exemples, les matières premières employées ont été choisies parmi:
- des grains de mullite-zircone fondus comportant en poids, plus de 99% de ZrO₂+Al₂O₃+SiO₂ et 35% de zircone sous forme principalement monoclinique dont la taille est comprise entre 0 et 3 mm;
- des grains de taille comprise entre 0 et 20 mm, obtenus par broyage de produits réfractaires électrofondus tels que l'ER-1681 ou l'ER-1711, produits et commercialisés par la Société Européenne des Produits Réfractaires. Ces produits contiennent en pourcentage en poids, sur la base des oxydes : 32 à 54% de ZrO₂, 36 à 51% d'Al₂O₃, 2 à 16% de SiO₂ et 0,2 à 1,5% de Na₂O ;
- des grains d'alumine tabulaire contenant plus de 99% d'alumine et dont la taille est comprise entre 40 µm et 3,5 mm ;
- des grains de mullite fondue ou frittée, par exemple une poudre qui contient 76,5% d'Al₂O₃ et 22,5% de SiO₂ et dont la grosseur des particules varie de 0,7 à 3 mm ;
- des produits à forte teneur en zircone, tels que la CS10 ou la CC10, commercialisées par la Société Européenne des Produits Réfractaires. Ces produits contiennent plus de 99% de ZrO₂ et le diamètre médian (D50) des particules de zircone est de 3,5 µm ;
- de l'alumine réactive, ou un mélange d'alumines réactives, contenant plus de 99% d'Al₂O₃, le diamètre médian des particules d'alumine réactive pouvant varier de 0,5 µm à 3 µm;
- de l'alumine électrofondue dont les particules ont une taille comprise entre 0,04 et 0,5 mm ;
- de la fumée de silice commercialisée par la Société Européenne des Produits Réfractaires. Cette silice vitreuse contient plus de 93% de silice (SiO₂) et se présente sous la forme d'une poudre dont les particules ont un diamètre médian de 1 µm maximum ;
- un ciment hydraulique ou un mélange de différents ciments ; on préfère utiliser un ciment à forte teneur en alumine, tel que le CA25 de la société Almatys. Le CA25 contient 78% d'Al₂O₃ et 18% de CaO ;
- du zircon sous forme de sable ou bien micronisé et contenant 33% de silice,
- du carbonate de calcium Na₂CO₃ ;
- de l'oxyde de chrome Cr₂O₃, sous forme pigmentaire, contenant plus de 99% d'oxyde de chrome 3 et se présentant sous la forme d'une poudre dont les particules ont un diamètre médian de 2 µm.

Des blocs réfractaires frittés ont été fabriqués selon le procédé décrit ci-dessus.

A l'étape a), les matières premières ont été dosées de manière que la charge de départ ait la composition chimique minérale pondérale moyenne désirée, puis mélangées en présence d'eau et d'au moins un dispersant, par exemple du phosphate de sodium.

La charge de départ a ensuite été coulée dans un moule de manière à former une préforme crue ayant une résistance mécanique suffisante pour pouvoir être manipulée. Elle a alors été séchée pendant 12 heures à 110°C. La préforme a enfin été frittée à une température de 1350°C ou 1630°C, de manière à former un bloc réfractaire.

Sur les différents exemples de blocs réalisés, des échantillons ont été prélevés pour réaliser des éprouvettes en forme de barreaux de 125 x 25 x 25 mm.

Pour mesurer les propriétés de résistance aux chocs thermiques, on a adopté l'essai normalisé PRE III.26/PRE/R.5.1/78. Cet essai permet de déterminer le comportement aux chocs thermiques par la perte relative de résistance à la flexion (DELTA MOR) après un ou plusieurs cycles consistant chacun à chauffer l'éprouvette d'essai de la température ambiante (20°C) jusqu'à une température maximale T égale à 1200°C, à maintenir l'éprouvette à cette température T pendant 30 minutes, puis à plonger l'éprouvette dans de l'eau froide.

Le MOR est le module de rupture.

Dans les tableaux suivants, MOR20 correspond à la valeur de MOR de l'échantillon à 20°C avant tout cycle de choc thermique, MORxcycle correspond à la valeur de MOR après « x » cycle(s) de choc thermique.

Les compositions des produits testés ainsi que leurs caractéristiques sont reportées dans le tableau 1.

**Tableau 1**

| | Grains mullite-zircone (%) | Composition chimique (%) | | | | MOR20 (mPa) | MORxcycle (MPa) / DELTA MOR (% par rapport à MOR20) | |
|---|---|---|---|---|---|---|---|---|
| | | Al₂O₃ | SiO₂ | ZrO₂ | Cr₂O₃ | | x=1 | x=3 |
| 1* | 0 | 76,1 | 11,5 | 11,0 | / | 20,8 | 6,0 / 71% | 3,0 / 86% |
| 2* | 0 | 91,0 | 8,6 | 0 | / | 10,4 | 3,3 / 68% | 3,0 / 71% |
| 3* | 16 | 79,7 | 7,5 | 11,5 | / | 17,5 | 6,3 / 64% | 3,0 / 83% |
| 20* | 0 | 87,0 | 0,4 | / | 12,0 | 33,2 | 1,5 / 95% | casse / 100% |
| 21* | 22 | 75,0 | 4,0 | 8,0 | 12,0 | 12,2 | 5,6 / 54% | 2,4 / 80% |

| | | | | | | | | |
|---|---|---|---|---|---|---|---|---|
| * : exemples en dehors de l'invention | | | | | | | | |

Au delà de la limite de 17% de grains de mullite-zircone, on remarque que la perte de MOR est limitée et/ou la valeur du MOR à 20°C est plus élevée.

Le tableau 3 suivant illustre l'intérêt de la présence de grains de tailles inférieures à 0,7mm.

**Tableau 3**

| | Composition chimique (% en poids) | | | | | Grains mullite-zircone (%)* | Grains mullite zircone 0-0,7 mm (%)* | MOR20 (mPa) | MOR 1 cycle (MPa) / DELTA MOR (% par rapport à MOR20) |
|---|---|---|---|---|---|---|---|---|---|
| | Al₂O₃ | SiO₂ | ZrO₂ | MgO | Cr₂O₃ | | | | |
| A | 79,8 | 7,7 | 11,9 | <0,1 | / | 20 | 0 | 17,4 | 7,9 / 55% |
| B | 78,9 | 7,8 | 12,6 | <0,1 | / | 20 | 0 | 21 | 10 / 52% |
| C | 78,9 | 7,8 | 12,6 | <0,1 | / | 20 | 4 | 20,7 | 10,5 / 49% |
| D | 78,9 | 7,8 | 12,6 | <0,1 | / | 20 | 4 | 20,3 | 10,5 / 48% |
| E | 80,1 | 7,5 | 11,8 | <0,1 | / | 25 | 0 | 17,4 | 7,9 / 55% |
| F | 78,7 | 8 | 12,8 | <0,1 | / | 25 | 5 | 20,9 | 11 / 47% |

| | | | | | | | | | |
|---|---|---|---|---|---|---|---|---|---|
| * : les pourcentages indiqués sont des pourcentages massiques par rapport à la masse totale de la composition. | | | | | | | | | |

Une comparaison des exemples A, B, C et D montre l'effet positif de la présence d'une tranche granulométrique fine (0-0,7mm) sur le module de rupture après choc thermique et sur le delta MOR, en particulier après une trempe. Les exemples E et F confirment ce constat, une teneur de 5% de ladite tranche granulométrique étant préférée.

Les mélanges de grains de mullite-zircone 0-0,7 mm utilisés contiennent généralement entre 30 et 50% en poids de grains inférieurs à 0,3 mm. Ainsi, l'exemple F comporte entre 1,5 et 2,5% de grains de mullite-zircone, par rapport à la masse totale de la composition, dont la taille est inférieure à 0,3 mm. Le produit selon l'invention comporte ainsi au moins 1 %, de préférence au moins 1,5%, en pourcentages en poids sur la base des oxydes, de grains de mullite-zircone présentant une taille inférieure ou égale à 0,3 mm.

## Revendications

1. Produit réfractaire fritté, sous la forme d'un bloc, constitué de plus de 99% d'oxydes et présentant l'analyse chimique moyenne suivante, en pourcentages en poids sur la base des oxydes :
20 % < Al₂O₃ < 90 %
2% ≤ SiO₂<30%
3 % < ZrO₂ < 50 %
0 % ≤ Cr₂O₃ < 0,5 %,
ce produit comportant de 17 à 85 % en poids de grains de mullite-zircone, comportant au moins 1 % de grains de mullite-zircone présentant une taille inférieure ou égale à 0,3 mm, et comportant moins de 22%, en pourcentage en poids sur la base des oxydes, de grains de mullite-zircone présentant une taille inférieure ou égale à 0,7 mm.

2. Produit réfractaire selon la revendication 1 comportant plus de 19 % et moins de 60% de grains de mullite-zircone, en pourcentages en poids sur la base des oxydes.

3. Produit réfractaire selon la revendication 1 comportant plus de 24 % et moins de 50% de grains de mullite-zircone, en pourcentages en poids sur la base des oxydes.

4. Produit réfractaire selon l'une quelconque des revendications précédentes comportant au moins 10 % et au plus 33 % de ZrO₂, en pourcentages en poids sur la base des oxydes.

5. Produit réfractaire selon l'une quelconque des revendications précédentes comportant au plus 18 % de SiO₂, en pourcentage en poids sur la base des oxydes.

6. Produit réfractaire selon l'une quelconque des revendications précédentes, comportant au moins 50 % et au plus 80 % de Al₂O₃, en pourcentages en poids sur la base des oxydes.

7. Produit réfractaire selon l'une quelconque des revendications précédentes dans lequel la somme des teneurs en Al₂O₃, SiO₂, ZrO₂ et Cr₂O₃ est supérieure ou égale à 94 %, en pourcentage en poids sur la base des oxydes.

8. Produit réfractaire selon l'une quelconque des revendications précédentes comportant, en pourcentage en poids sur la base des oxydes, plus de 19 % et moins de 50 % de grains de mullite-zircone, au moins 10 % de ZrO₂ et moins de 0,5 % de MgO.

9. Produit réfractaire selon l'une quelconque des revendications précédentes comportant moins de 0,5% de MgO, en pourcentage en poids sur la base des oxydes.

10. Produit réfractaire selon l'une quelconque des revendications précédentes fabriqué suivant un procédé de fabrication comportant les étapes successives suivantes :
a) préparation d'une charge de départ adaptée,
b) coulage de la dite charge dans un moule ou compaction par vibration et/ou pressage et/ou pilonnage de ladite charge à l'intérieur du moule de manière à former une préforme,
c) démoulage de la préforme,
d) séchage de ladite préforme,
e) cuisson de ladite préforme sous atmosphère oxydante à une température comprise entre 1300 à 1800°C.

11. Produit réfractaire selon l'une quelconque des revendications précédentes fritté avant mise en position de service.

12. Produit réfractaire selon l'une quelconque des revendications précédentes ne contenant pas de silicium métal et/ou de fibres métalliques.

13. Produit réfractaire selon l'une quelconque des revendications précédentes, dans lequel la taille des grains de mullite-zircone est comprise entre 0 et 3 mm.

14. Produit réfractaire selon l'une quelconque des revendications précédentes comportant, en pourcentages en poids sur la base des oxydes, au moins 3% de grains de mullite-zircone présentant une taille inférieure ou égale à 0,7 mm.

15. Produit réfractaire selon l'une quelconque des revendications précédentes comportant moins de 1% en poids de MgO, sur la base des oxydes.

16. Utilisation d'un produit réfractaire selon l'une quelconque des revendications 1 à 15, comme pièce de forme pour la mise en forme du verre fondu, ou comme tuile réfractaire ou comme revêtement réfractaire.

## Patentansprüche

1. Gesintertes Feuerfestprodukt in Form eines Blocks und zusammengesetzt aus mehr als 99% Oxyden, welches eine mittlere chemische Analyse in Gewichtsprozenten auf der Basis von Oxyden aufweist:
20% < Al₂O₃ < 90%
2% ≤ SiO₂ < 30%
3% < ZrO₂ < 50%
0% ≤ Cr₂O₃ < 0,5%,
wobei das Produkt 17 bis 85 Massenprozent an Zirkonmullit - Körnern aufweist, wobei mindestens 1 % der Mullit-Zirkonkörner eine Größe kleiner oder gleich 0,3 mm aufweisen und weniger als 22 Gewichtsprozent auf der Basis von Oxyden an Mullit-Zirkonkörnern aufweist, die eine Größe kleiner oder gleich 0,7 mm aufweisen.

2. Feuerfestprodukt nach Anspruch 1, welches mehr als 19% und weniger als 60% an Mullit-Zirkonkörnern aufweist und zwar in Gewichtsprozent auf der Basis von Oxyden.

3. Feuerfestprodukt nach Anspruch 1, welches mehr als 24% und weniger als 50% an Mullit-Zirkonkörnern aufweist und zwar in Gewichtsprozent auf der Basis von Oxyden.

4. Feuerfestprodukt nach einem der vorhergehenden Ansprüche, welches mindestens 10% und höchstens 33% an ZrO₂ aufweist und zwar in Gewichtsprozent auf der Basis von Oxyden.

5. Feuerfestprodukt nach einem der vorhergehenden Ansprüche, welches höchstens 18% an SiO₂ aufweist, und zwar in Gewichtsprozent auf der Basis von Oxyden.

6. Feuerfestprodukt nach einem der vorhergehenden Ansprüche, welches mindestens 50% und höchstens 80% an Al₂O₃ aufweist, und zwar in Gewichtsprozent auf der Basis von Oxyden.

7. Feuerfestprodukt nach einem der vorhergehenden Ansprüche, in welchem die Summe der Gehalte an Al₂O₃, SiO₂, ZrO₂ und Cr₂O₃ größer oder gleich 94% ist, und zwar in Gewichtsprozent auf der Basis von Oxyden.

8. Feuerfestprodukt nach einem der vorhergehenden Ansprüche, welches in Gewichtsprozent auf der Basis von Oxyden mehr als 19% und weniger als 50% an Mullit-Zirkonkörnern aufweist, mindestens 10% an ZrO₂ und weniger als 0,5% an MgO.

9. Feuerfestprodukt nach einem der vorhergehenden Ansprüche, welches weniger als 0,5% (?) Mg0 aufweist und zwar in Gewichtsprozent auf der Basis von Oxyden.

10. Feuerfestprodukt nach einem der vorhergehenden Ansprüche, welches gemäß einem Herstellungsverfahren mit folgenden aufeinanderfolgenden Schritten hergestellt ist:
a) Zubereitung einer adaptierten Ausgangscharge,
b) Gießen der Charge in eine Form oder Verdichten durch Vibration und/oder Verpressen und/oder Zerstampfen der Charge im Inneren der Form, derart, dass eine Vorform gebildet wird,
c) Entformen der Vorform,
d) Trocknung der Vorform,
e) Backen der Vorform unter Sauerstoffatmosphäre bei einer Temperatur zwischen 1300 und 1800°C.

11. Feuerfestprodukt nach einem der vorhergehenden Ansprüche, welches vor dem Inbetriebbringen in die Dienstposition gesintert wird.

12. Feuerfestprodukt nach einem der vorhergehenden Ansprüche, welches Silizium-Metall und/oder metallische Fasern nicht enthält.

13. Feuerfestprodukt nach einem der vorhergehenden Ansprüche, in welchem die Größe der Mullit-Zirkon-Körner zwischen 0 und 3 mm liegt.

14. Feuerfestprodukt nach einem der vorhergehenden Ansprüche, welches in Gewichtsprozent auf der Basis von Oxyden mindestens 3% an Mullit-Zirkon-Körnern aufweist, welche eine Größe kleiner oder gleich 0,7 mm aufweisen.

15. Feuerfestprodukt nach einem der vorhergehenden Ansprüche, welches weniger als 1 (?) Gewichtsprozent MgO auf der Basis von Oxyden aufweist.

16. Verwendung eines Feuerfestprodukts nach einem der Ansprüche 1 bis 15 als Formteil um geschmolzenes Glas in Form zu bringen, oder als feuerfestes Rohr oder als feuerfeste Verkleidung.

## Claims

1. Refractory sintered product, in the form of a block, including more than 99%, by weight, of oxides and having the following average chemical composition, the percentages by weight being on the basis of the oxides:
20% < Al₂O₃ < 90%
2% ≤ SiO₂ < 30%
3% < ZrO₂ < 50%
0% ≤ Cr₂O₃ < 0.5%
this product containing 17 to 85% of mullite-zirconia grains, containing at least 1% of mullite-zirconia grains having a size of 0.3 mm or less, and containing, as percentages by weight on the basis of the oxides, less than 22% of mullite-zirconia grains having a size of 0.7 mm or less.

2. Refractory product according to claim 1, which contains, as percentages by weight on the basis of the oxides, more than 19% and less than 60% of mullite-zirconia grains.

3. Refractory product according to claim 1, which contains, as percentages by weight on the basis of the oxides, more than 24% and less than 50% of mullite-zirconia grains.

4. Refractory product according to any one of the preceding claims, which contains, as percentages by weight on the basis of the oxides, at least 10% and at most 33% of ZrO₂.

5. Refractory product according to any one of the preceding claims, which contains, as percentages by weight on the basis of the oxides, at most 18% of SiO₂.

6. Refractory product according to any one of the preceding claims, which contains, as percentages by weight on the basis of the oxides, at least 50% and at most 80% of Al₂O₃.

7. Refractory product according to any one of the preceding claims, wherein the sum of the Al₂O₃, SiO₂, ZrO₂ and Cr₂O₃ contents is 94% or more, as percentages by weight on the basis of the oxides.

8. Refractory product according to any one of the preceding claims, which contains, as a percentage by weight based on the oxides, more than 19% and less than 50% of mullite-zirconia grains, at least 10% of ZrO₂ and less than 0.5% of MgO.

9. Refractory product according to any one of the preceding claims, which contains, as a percentage by weight on the basis of the oxides, less than 0.5% of MgO.

10. Refractory product according to any one of the preceding claims, which is manufactured according to a manufacturing process comprising the consecutive steps of:
a) preparing an appropriate starting charge,
b) casting said charge in a mold or compacting it by vibrating and/or pressing and/or tamping said charge within the mold to form a preform,
c) removing said preform from the mold,
d) drying said preform,
e) firing said preform in an oxidizing atmosphere at a temperature in the range 1300 to 1800°C.

11. Refractory product according to any one of the preceding claims, which is sintered before being placed in its operational position.

12. Refractory product according to any one of the preceding claims, containing no metal silicon and/or no metal fibers.

13. Refractory product according to any one of the preceding claims, in which the grain size of mullite-zirconia lies in the range 0 to 3 mm.

14. Refractory product according to any one of the preceding claims, containing, as a percentage by weight on the basis of the oxides, at least 3% of mullite-zirconia grains having a size of 0.7 mm or less.

15. Refractory product according to any one of the preceding claims, containing less than 1% by weight of MgO, on the basis of the oxides.

16. Use of a refractory product according to any of claims 1 to 15, as a shaped refractory part for shaping molten glass or as a refractory tile or as a refractory lining.
